# EUROPEAN PATENT APPLICATION

(11) **EP 1 119 189 A2**
(43) Date of publication of application: **25.07.2001**
(21) Application number: 01300392.6
(22) Date of filing: 17.01.2001
(51) Int. Cl.: H04N 3/15

(54) **CMOS image sensor with analog memory**

(30) Priority: 21.01.2000 US 177496 P
(71) Applicant: Symagery Microsystems Inc., Ottawa, Ontario K2K 2A5 (CA)
(72) Inventor: Scott-Thomas, John, Ottawa, Ontario K1S 2H7 (CA)
(74) Representative: Maury, Richard Philip

(57) **Abstract**

The image sensor comprises an analog memory array integrated on a die with a CMOS sensor array and coupled to the sensor array for receiving light intensity signals from the sensor array. The sensor array may comprise light sensitive pixels arranged in rows and columns equal in number or greater than the number of memory cells in the memory array which are also arranged in rows and columns. The memory cells may be grouped into one or more distinct memory arrays. The image sensor operates in a rolling shutter mode which closely approximates electronic frame capture since the transfer process can be made sufficiently fast. This CMOS image sensor is particularly advantageous since it can be produced without requiring a special manufacturing process and still maintains a high performance level. Certain features of the image sensor along with the optical isolation of the memory array result in longer hold times in the memory cells by reducing the effects of light piping, optically enhanced sub-threshold current, and photo charge in the substrate. Structural variations in the sensor and the memory arrays may be compensated by double sampling the data from the sensor array.

## Description

### Field of the Invention

The invention relates generally to image sensors, and more particularly to integrated CMOS image sensors.

### Background of the Invention

Current image sensors utilize two differing technologies. Charge coupled device (CCD) image sensors are the more established technology. However, CMOS image sensors have become more popular in the industry over the last few years. Both technologies create an electrical signal representative of the light impinging on the sensor. Until recently, CCD's produced higher quality images than CMOS sensors. The image quality produced by CMOS sensors has improved dramatically in recent years, which when coupled with the fact that these sensors can be manufactured using standard CMOS processes explains their increase in popularity.

CCD sensors are designed by coupling photo detectors such as photodiodes to a charge coupled device that is used to both store and transfer the charge generated by the photo detectors. The charge coupled device is comprised of a series of overlapping gates that are sequentially connected to different phases of a clock signal. In most CCD sensors there are either three or four clock phases. Charge can be stored under a particular gate by providing that gate with a high voltage and the adjacent gates with a low voltage. Charge is transferred between adjacent gates by holding both gates at a high voltage and then driving the gate that initially held the charge to a low voltage.

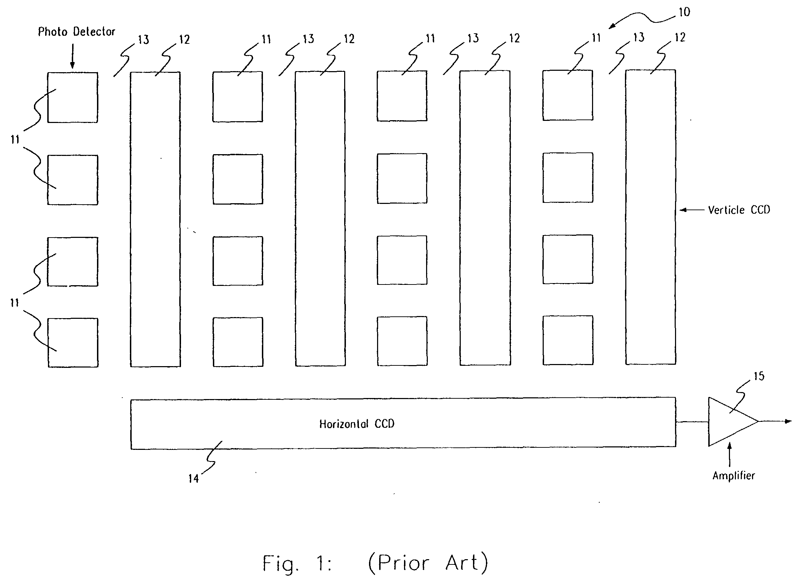

As illustrated in figure 1, a common CCD sensor architecture 10 employs multiple columns of photo detectors 11. Each column is coupled to a vertical charge coupled devicel2 through a transfer gate 13. During readout, charge is transferred from the photo detectors 11 into the vertical charge coupled devices 12. The vertical charge coupled devices 12 transfer this charge into a horizontal charge coupled device 14, one row at a time. The output of the horizontal charge coupled device 14 is connected to an amplifier 15 that converts the charge into a voltage that can be transferred off chip.

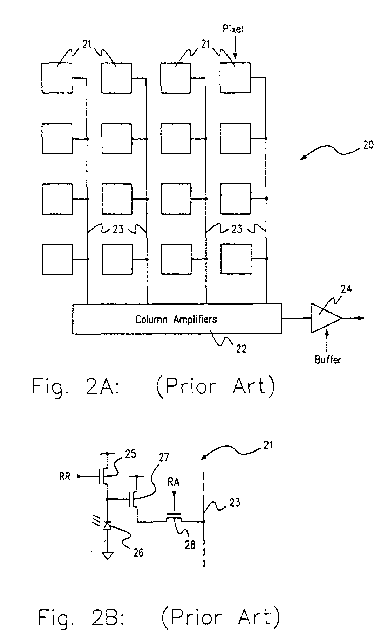

Figure 2A illustrates a CMOS sensor 20 which utilizes sensor elements known as active photosensitive (APS) pixels 21 laid out in rows and columns. Pixels 21 are connected to column amplifiers 22 through data lines 23. The amplified output signals are stored in a buffer 24. A common APS pixel 21 is a 3T (three-transistor) pixel as shown in figure 2B. The 3T pixel 21 comprises a reset transistor 26 that is controlled by a reset clock signal RR and is coupled to a photodiode 26, a second transistor 27 that is configured as a source follower amplifier with its gate connected to a common node between the reset transistor 25 and the photodiode 26, and a third transistor 28 that serves as an access transistor and is controlled by an access clock signal RA to allow a data point signal level to be transferred to a data line 23.

A signal level proportional to the intensity of light striking the pixel can be read out by sampling the amount of charge collected or discharged during a period of exposure. This exposure period is also known as the integration time and begins with the reset (i.e. draining or replenishment) of all charge in the pixel and ends when the amount of charge remaining in the pixel is sampled in some manner.

Sensors can capture images using a number of techniques. Currently, the most common technique, rolling shutter capture, interrogates one row of pixels at a time. Each row is reset in sequence and then sampled and read out, again in sequence. Rolling shutter techniques are often fine for video applications. However, they are not always suitable for capturing still images. If the subject of a still image, such as a photograph, is moving during the integration period, rolling shutter techniques result in a blurred image. As the subject moves, it is in a different position when sequential rows are interrogated.

The amount of time required to transfer image data off chip from an optical sensor array is much longer than the exposure or integration time. For example, a one mega-pixel array being clocked at 50 MHz will require 20 ms to transfer the data from the entire array off chip. If a rolling shutter technique were to be used in this case, image blur due to motion of the subject being imaged would occur.

A solution to this problem is known as the frame capture method. In frame capture, each row begins and ends integration at the same time and then is read out sequentially. This means that each pixel must sample the amount of charge present at the end of the integration period and hold that charge until that row is read out. Therefore, each pixel must retain a fixed amount of charge for an extended period of time. As array sizes increase into the mega-pixel range, the amount of time required to read out the entire array is also growing. This obviously strains the limit of the charge retention capabilities of the pixels.

Implementing electronic frame capture requires an on chip memory. CCD sensors have an advantage in that charge coupled devices have excellent charge storage properties when isolated from light. Frame capture CCD sensors take advantage of this fact. They usually consist of two nearly identical arrays. The first array is used as the image sensor while the second array is covered with a light shield and is used for storage. Charge can be quickly transferred between the two arrays because each column can be transferred in parallel.

Unfortunately, CMOS sensors are not as suited for frame capture. Pixel structures in which a storage node is located within the pixel have been suggested. Some of the proposed structures include four transistor (4T) and five transistor (5T) arrangements. The problem with these arrangements is that light piping, optically enhanced sub-threshold current, and photo charge in the substrate can cause the sense node to lose its charge during frame readout if the data transfer time is to large.

United States Patent 5,808,676 to Biegelsen et al has tried to address this problem by integrating an analog memory element into the pixel itself. Biegelsen et al discusses using a non-volatile analog memory element to store the pixel value indefinitely. In the preferred embodiment of the invention, this memory element is ferroelectric in nature. Such an arrangement has a number of disadvantages. Firstly, a specialized process would be required to produce a ferroelectric memory element. This would greatly increase the cost of manufacturing the image sensors, probably making them comparable to CCD's in cost. Secondly, adding a memory element in the pixel itself reduces the fill factor or percentage of the pixel that is optically sensitive. This greatly reduces the performance of the pixel.

United States Patent Number 6,069,376 to Merril also proposes to integrate an analog memory element. Merril discloses a four-transistor pixel that includes a storage capacitor that is isolated from the photodiode by one of the transistors. The bias voltage applied to the diffusion node of this capacitor can be switched to adjust the storage characteristics of the capacitor. Merril's solution has a similar disadvantage to that of Biegelsen et al. By integrating a memory element into the pixel, the fill factor is greatly reduced. There is the additional disadvantage of the additional control circuitry and signal lines required to switch the bias voltage being applied to the storage capacitor.

United States Patent 5,909,026 to Zhou et al discloses a frame memory array for storing signals from the sensor array. The intent of this array is to provide a sensor whose resolution can be adapted. Once the image data is stored in the memory array, portions of the data can be selectively transferred off chip rather than having to transfer the entire image. Zhou et al does not provide detail with respect to the implementation of the memory array other then mentioning a memory cell comprised of an access transistor and a storage capacitor. Zhou et al does not disclose or infer the use of a memory array to implement a frame capture image sensor, nor does it address the optical isolation of the memory array both with respect to external light or light piping from the sensor array. Zhou et al further does not discuss the efficient transfer of data between the sensor array and the memory array, the reduction of leakage current from the memory array by eliminating electron-hole recombination, or the sub-threshold leakage across the memory cell access. If the voltage difference between the source and drain of this transistor were large enough, charge would leak across the transistor even when the threshold voltage is not exceeded.

Therefore, there is a need for an integrated CMOS image sensor which exhibits a readout that is substantially equivalent to frame capture.

### Summary of the Invention

This invention is directed to an image sensor comprising an analog memory array integrated on the die with a CMOS sensor array and coupled to the sensor array for receiving light intensity signals from the sensor array. The sensor array may comprise a number N of light sensitive pixels arranged in rows and columns and the memory array may comprise a number M of memory cells also arranged in rows and columns. Though in the preferred embodiment, the number N of pixels is equal to the number M of memory cells, this need not be a case and the number M of memory cells may be substantially less than the number N of pixels.

In accordance with another aspect of the invention, the memory array may comprise a number M of memory cells arranged in rows and columns and grouped into at least two distinct memory arrays. The number N of pixels in this embodiment is preferably equal to the total number M of memory cells in all of the memory arrays.

With regard to a further aspect of the invention, the memory array is physically spaced from the sensor array on the die at a distance greater than the recombination length of electron-hole pairs between the arrays, which may be in the order at least 50 microns. In addition, to prevent electron-hole pair recombination, the die may include a doped trench between the memory array and the sensor array which is adapted to be biased so as to collect free carriers. Also, the memory array may be optically isolated to prevent charge leakage from the memory cells.

In accordance with a further aspect of the invention, the conductive lines for coupling the sensor array and the memory array are made to follow a winding path to prevent light piping. This embodiment may further include an arrangement of vertical conductive column structures on the die between the sensor array and the memory array through which the conductive lines follow a winding path.

In another aspect of the invention, each column of pixels is coupled through a column data line by an access transistor to a column amplifier; and the column amplifier is coupled to each memory cell in the column through a memory data line. Each memory cell may comprise a capacitor for storing a charge and an access transistor coupled between the capacitor and the memory data line. Further in order to prevent sub-threshold leakage, an electronic switch may couple an intermediate voltage source to the memory column data lines to apply an intermediate voltage to the memory data lines when light intensity signals are not being transferred to or from the memory cells.

With regard to a further aspect of this invention, the image sensor may be controlled to apply a signal to the capacitor in the memory cells which is the difference between the reset signal and the light intensity signal in the pixels. Alternately, the image sensor may be controlled to apply the light intensity signal followed by the reset signal of the pixels to the capacitor in the memory cells.

Other aspects and advantages of the invention, as well as the structure and operation of various embodiments of the invention, will become apparent to those ordinarily skilled in the art upon review of the following description of the invention in conjunction with the accompanying drawings.

### Brief Description of the Drawings

The invention will be described with reference to the accompanying drawings, wherein:
Figure 1 is a prior art CCD image sensor;
Figure 2A is a schematic of a conventional CMOS image sensor;
Figure 2B is a three transistor CMOS pixel;
Figure 3 is a block diagram of the image sensor in accordance with the present invention;
Figure 4 illustrates one column for the sensor array/memory array in the image sensor;
Figure 5A is a block diagram illustrating separation between the sensor array and the memory array;
Figure 5B illustrates an isolation trench between the sensor array and the memory array;
Figure 6 is an example of the metal lines between the arrays; and
Figure 7 is a block diagram of a sensor array connected to multiple memory arrays.

### Detailed Description of the Invention

The preferred embodiment of the image sensor 30 in accordance with the present invention comprises a CMOS sensor array 31 integrated on a die 32 and an analog memory array 33 and readout circuitry 34 integrated on the same die 32 as the sensor array 31. The memory array 33 elements are not integrated into the sensor array 31 elements, but is physically removed from the sensor array 31. In addition, the analog memory array 33 is optically isolated. Techniques for optically isolating portions of a semiconductor die are well known in the art, such as by covering the desired portion of the die by a metal layer 35, and will not be described further herein.

As illustrated in figure 2A, the pixels 21 in the CMOS image sensor 20 are conventionally laid out in rows and columns. In the preferred embodiment, the memory - array 33 will have an equal number of memory cells as there are pixels 21 and may also be laid out in the same number of rows and columns as the pixels 21. This type of symmetry will facilitate the design of the integrated circuit.

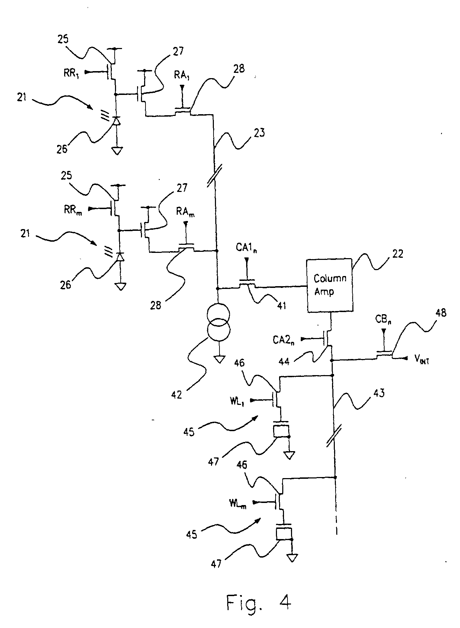

Figure 4 schematically illustrates a column of pixels 21 of the type described with respect to figure 2B connected through a column data line 23 and an access transistor 41 to a column amplifier 22. Access transistor is controlled by clock signal CA1. In addition, in some image sensors 20, a current source 42 may be required and is coupled between the data line 23 and ground. In an image sensor 20, there may be in the order of 1000 such pixels 21 in each column as well as in the order of 1000 such columns. For simplicity of explanation however, the invention will be described with the illustration of two pixels 21 in one column.

Further in accordance with the present invention, the output of the column amplifier 22 is connected to a memory column data line 43 through a further access transistor 44 which is controlled by clock signal CA2. A series of memory cells 45 equal in number to the pixels 21 in the imaging array column, are coupled to the memory column data line 43. Each analog memory cell 45 comprises an access transistor 46 which is controlled by clock signal WL and a capacitor 47. In one embodiment, the capacitor 47 may take the form of a field effect transistor (FET) 47 with its source and drain coupled together. The polysilicon gate of the transistor 47 serves as the storage node of the capacitor while the source and drain are held at a reference voltage, for example ground. This greatly reduces the rate of charge leakage. Alternatively, a double polysilicon capacitor or another form of capacitor could be used. Such memory cells 45 will hold an analog value for a period measuring in the tens of milliseconds. To further increase the hold time, techniques such as biasing the substrate with a negative voltage can be employed.

In operation, after the pixels 21 in a column have been reset, a signal proportional to the intensity of light striking the photodiode 26 can be sequentially readout from each of the pixels 21 in a column. These signals are amplified by the column amplifier 22 and used to place a charge on the capacitor 47 of a corresponding memory cell 45. To achieve this, the clock signal RA to cell access transistors 28 is synchronized with the clock signal WL to access transistor 46 in the memory cell 45. This process will simultaneously occur for each of the columns of pixels 21 in the sensor array 20.

Data from the entire sensor array 20 is known as a frame of data. The frame rate refers to the speed at which this data is transferred off chip. Standard frame rates are 30-60 frames per second. This translates into a period of 33 milliseconds. Comparing this period to the time required to transfer data out of the sensor array 20 but not off chip, it can be estimated how long it would take to transfer data from all of the rows. A very conservative estimate of the time required to transfer one row of data out of the sensor array is 200 nanoseconds. In a mega pixel array where there are approximately 1000 rows, this means that an entire frame of data can be transferred out of the sensor array 20 in 200 microseconds. More aggressive estimates place this transfer time at 50 microseconds. The difference between the transfer rate and the frame rate results from the bottleneck at the output of the chip. Current image sensors only offload one pixel of data at a time. However, an entire row of image data can be transferred out of the sensor array 20 into the memory array 33 at a given time. In a mega pixel array, this corresponds to data from roughly 1000 pixels. Therefore, a parallel to serial conversion must take place before data can be sent off chip. This buffering and multiplexing of data results in the difference between the frame rate and the array transfer rate.

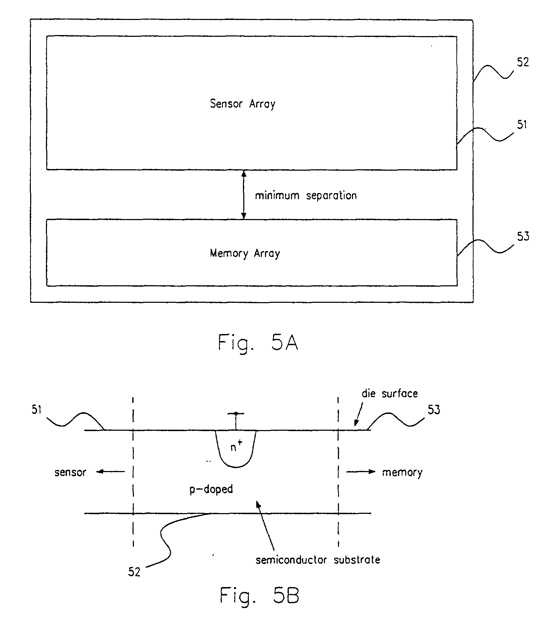

In order to maximize the effectiveness of the present invention, the integrated sensor array and memory array may be implemented with a number of advantageous features. For instance, as illustrated in figures 5A and 5B, the memory array 53 on the die 52 will be placed at a minimum distance from the sensor array 51 in order to minimize the effect of photocurrent which is caused by the migration of electrons from the sensor array 51 to the memory array 53. For most semiconductor manufacturing processes, this minimum distance is in the range of 50 microns to 100 microns. The exact distance chosen must be greater than the recombination length of electron-hole pairs in the given process. This is dependent on the doping levels used in the selected manufacturing process. Another option would be to place an isolation trench 54 between the sensor array 51 and the memory array 53. With a positive charge placed on the n-doped trench 54 in a p-doped substrate 52, free electrons emanating from the sensor array 51 are attracted by the n-doped trench 54 before they can recombine with holes in the memory array 53. If free carriers are not collected, the recombination results in a photocurrent that would increase the amount of charge leakage from the memory cells in memory array 53.

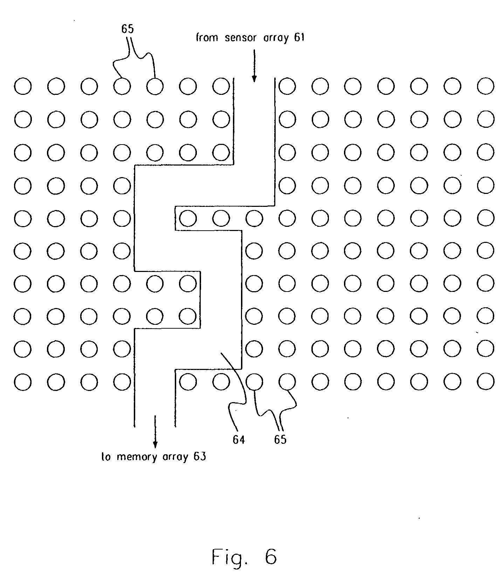

As illustrated in figure 6, in addition to optically shielding the memory array 63, specific steps may be taken in order to protect the memory array 63 from the effects of light piping from the sensor array 61. Light piping occurs when light follows a straight metal line or bus 64 that connects a component in the sensor array 61 to a component in the memory array 63. Light piping will cause a photocurrent in the memory array, resulting in increased leakage and reduced hold times for the memory cells. To eliminate this problem, the layout of each line 64 leading from the sensor array 61 to the memory array 63 needs to be carefully considered. In the embodiment illustrated in figure 6, an arrangement or forest of via and/or contact like conductive column structures 65 may be disposed between the sensor array 61 and the memory array 63 at least at the level of the metal lines 64. The ends of the structures 65 need not terminate on a component or bus in the integrated circuit. Any lines 61 connecting the two arrays 61 and 63 will then be wound through this forest of conductive structures 65. This will block most if not all of the light piping effects since the conductive lines 64 between the arrays 61 and 63 do not follow straight paths.

A further feature of the present invention is illustrated in figure 4. It includes the use of a transistor 48 which is capable of applying an intermediate voltage V_{INT} to the memory data line 43 under the control of clock signal CB when data is not being transferred to or from the memory cells 45. V_{INT} will have a value between ground and the supply voltage V_{DD} and would generally be = ½ V_{DD}. Voltage V_{INT} is isolated to memory data line 43 by opening transistor 44 which is controlled by clock signal CA2. Applying V_{INT} to memory data line 43 prevents the voltage difference between the source and drain of transistor 46 from ever being large enough to cause sub-threshold leakage. Sub-threshold leakage is a term used to indicate the small amount of charge that is transferred between the source and drain of a transistor when the voltage difference between the gate and source is less than the threshold voltage and the transistor is theoretically turned off. This condition occurs when there is a large enough voltage difference between the source and the drain of the transistor.

CMOS sensor arrays and memory arrays suffer from fixed pattern noise due to process differences across the arrays. Due to variations in the manufacturing process, transistor gate lengths and the sizes of other features are not precisely consistent across the arrays. A pixel or memory cell at one location in the array may have a slightly different response than a pixel or memory cell at another location. In order to compensate for this effect, double sampling may be used. Double sampling consists of subtracting the sampled value from the pixel at the end of the integration time from a reset level of that pixel, and using the result as the data point. This eliminates the effects of process variations in the sensor array. In most CMOS sensors, the double sampling will take place in the column amplifier 22 and the output of the column amplifier 22 is then conveyed to the memory array through a transfer gate 44. In a further embodiment, the memory array may also be used in the double sampling process in order to compensate for process variations in the memory array as well as the sensor array. The operation involves transferring the sampled value at the end of the integration period to the memory array and then leaving the transfer gate 46 open while the pixel is reset so that the reset value can be subtracted from the sampled value on the capacitor 47.

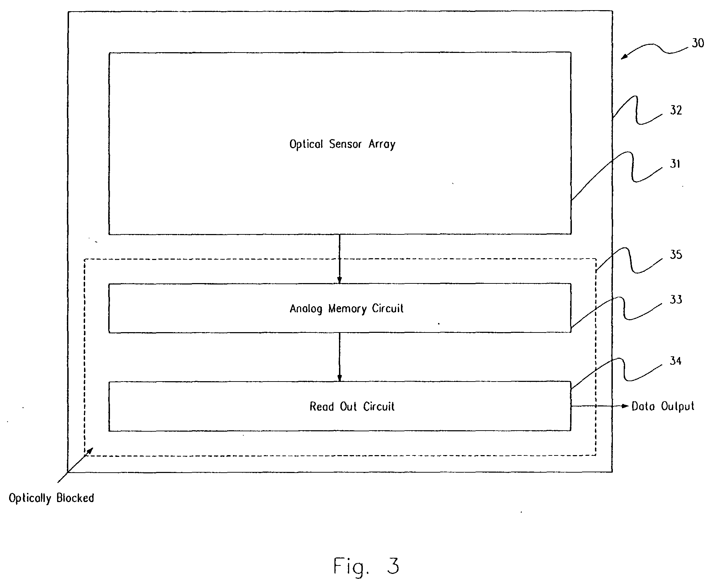

In other embodiments of the present invention, the size and configuration of the memory array with respect to the sensor array may be varied. As mentioned previously with respect to figure 3, the preferred embodiment of the invention utilizes a memory array 33 that has the same number of memory cells as the sensor array 31 has pixels. However, the memory array 33 may have fewer cells than the sensor array 31 has pixels. This would require the frame rate to be comparable to the array transfer rate. This type of arrangement allows the image sensor die to be much smaller. In addition, the memory array 33 may be controlled to store the signals from pixels in a selected limited area of the sensor array 31. As the memory array 33 becomes full of data, the data transferred to the memory array 33 at an earlier stage will be transferred off chip to create room in the memory array 33 for additional data from the sensor array 31. A host interface which allows an outside processor to come and get the data from the image sensor memory is described in co-pending application entitled "Host Interface for Imaging Arrays" filed as European Patent Application Serial No. on by Mark Suska which is incorporated herein by reference. In this application, a system is described wherein, in response to the quantity of data in a memory, a signal generator generates a signal for transmission to the processor system and a circuit controls the transfer of the data from the memory at a rate determined by the processor system. The signal generator may generate either an interrupt signal for transmission to the processor system or a bus request signal for transmission to a bus arbitration unit for the processor system.

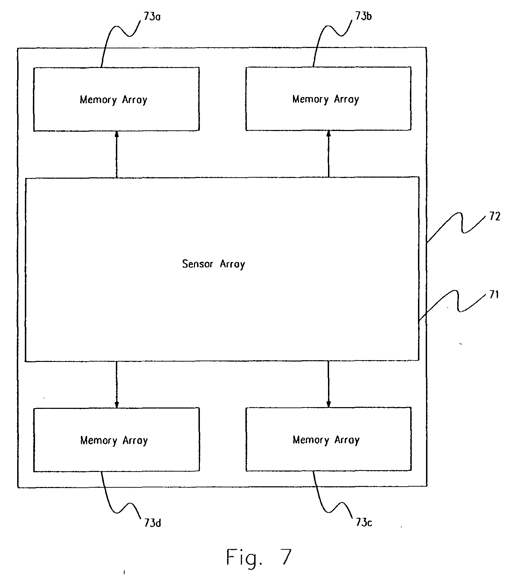

In a further embodiment of the present invention, as illustrated in figure 7, multiple memory arrays 73a to 73d having the same capacity as a single memory array may be combined on the same die 72 with a sensor array 71. This reduces parasitic capacitive and resistive loads between the sensor array 71 and the memory arrays 73a to 73d as well as the data output path because the paths would be shorter. The reduced loads increases the transfer rate of the data out of the sensor array 71. This will occur because half of the rows in the sensor array 71 will be transferring data to memory arrays 73a and 73b at the same time as the other half of the rows in the sensor array 71 will be transferring data to memory arrays 73d and 73c. Thus the data transfer time will be halved, however at the cost of the space required for the control circuits.

The image sensor in accordance with the present invention operates in a rolling shutter mode in which the pixel light intensity signals are transferred to the analog memory array which is integrated on the same die as the sensor array. Although this is not electronic frame capture per se, it closely approximates such a capture since the transfer process can be made sufficiently fast. This CMOS image sensor is particularly advantageous since it can be produced without requiring a special manufacturing process and still maintains a high performance level.

While the invention has been described according to what is presently considered to be the most practical and preferred embodiments, it must be understood that the invention is not limited to the disclosed embodiments. Those ordinarily skilled in the art will understand that various modifications and equivalent structures and functions may be made without departing from the spirit and scope of the invention as defined in the claims. Therefore, the invention as defined in the claims must be accorded the broadest possible interpretation so as to encompass all such modifications and equivalent structures and functions.

## Claims

1. An image sensor comprising:
- a CMOS sensor array integrated on a die; and
- an analog memory array integrated on the die and coupled to the sensor array for receiving light intensity signals from the sensor array.

2. An image sensor as claimed in claim 1 wherein the sensor array comprises a number N of light sensitive pixels arranged in rows and columns.

3. An image sensor as claimed in claim 2 wherein the memory array comprises a number M of memory cells arranged in rows and columns.

4. An image sensor as claimed in claim 3 wherein the number N of pixels is equal to the number M of memory cells.

5. An image sensor as claimed in claim 3 wherein the number N of pixels is greater than the number M of memory cells.

6. An image sensor as claimed in claim 1 wherein the memory array is physically spaced from the sensor array at a distance greater than the recombination length of electron-hole pairs between the arrays.

7. An image sensor as claimed in claim 6 wherein the distance between the memory array and the sensor array is greater than approximately 50 microns.

8. An image sensor as claimed in claim 6 wherein the die includes a doped trench between the memory array and the sensor array adapted to be biased to collect free carriers.

9. An image sensor as claimed in claim 6 wherein the memory array is optically isolated.

10. An image sensor as claimed in claim 1 which further comprises conductive lines for coupling the sensor array and the memory array.

11. An image sensor as claimed in claim 10 wherein the conductive lines follow a winding path.

12. An image sensor as claimed in claim 10 wherein the die between the sensor array and the memory array includes an arrangement of vertical conductive column structures.

13. An image sensor as claimed in claim 12 wherein the conductive lines follow a winding path through the column structures.

14. An image sensor as claimed in claim 2 wherein the memory array comprises a number M of memory cells arranged in rows and columns and grouped into at least two distinct memory arrays.

15. An image sensor as claimed in claim 14 wherein the number N of pixels is equal to the number M of memory cells.

16. An image sensor as claimed in claim 4 wherein:
- each column of pixels is coupled through a column data line by an access transistor to a column amplifier; and
- the column amplifier is coupled to each memory cell in the column through a memory data line.

17. An image sensor as claimed in claim 16 wherein each memory cell comprises capacitor means for storing a charge and an access transistor coupled between the capacitor means and the memory data line.

18. An image sensor as claimed in claim 17 which further comprises switch means couple between an intermediate voltage source and each of the memory column data lines and adapted to apply an intermediate voltage to the memory data lines when signals are not being transferred to or from the memory cells.

19. An image sensor as claimed in claim 16 wherein the column amplifier is adapted to apply a signal to the capacitor means in the memory cell which is the difference between the pixel reset signal and the pixel light intensity signal.

20. An image sensor as claimed in claim 16 wherein column amplifier is adapted to apply the pixel light intensity signal followed by the pixel reset signal to the capacitor means in the memory cell.
